(19) Europäisches Patentamt
European Patent Office
Office européen des brevets

(11) **EP 4 576 541 A1**

(12) **EUROPEAN PATENT APPLICATION**
published in accordance with Art. 153(4) EPC

(43) Date of publication:
**25.06.2025 Bulletin 2025/26**

(21) Application number: 23915679.7

(22) Date of filing: **31.10.2023**

(51) International Patent Classification (IPC):
**H02M 3/158** (2006.01)

(52) Cooperative Patent Classification (CPC):
Y02T 10/70

(86) International application number:
**PCT/CN2023/128853**

(87) International publication number:
**WO 2024/148921 (18.07.2024 Gazette 2024/29)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.01.2023 CN 202310026367**

(71) Applicants:
• **Wuxi InfiMotion Propulsion Technology Co., Ltd.**
**Wuxi, Jiangsu 214181 (CN)**
• **Wuxi InfiMotion Technology Co., Ltd.**
**Wuxi, Jiangsu 214181 (CN)**

(72) Inventors:
• **ZHANG, Hongwen**
**Wuxi, Jiangsu 214181 (CN)**

• **LIN, Xiaozhe**
**Wuxi, Jiangsu 214181 (CN)**
• **YU, Haisheng**
**Wuxi, Jiangsu 214181 (CN)**
• **ZHENG, Fuhui**
**Wuxi, Jiangsu 214181 (CN)**
• **ZHAO, Yuting**
**Wuxi, Jiangsu 214181 (CN)**
• **JIANG, Zhuo**
**Wuxi, Jiangsu 214181 (CN)**

(74) Representative: **Osterhoff, Utz**
**Bockermann Ksoll**
**Griepenstroh Osterhoff**
**Patentanwälte**
**Bergstraße 159**
**44791 Bochum (DE)**

(54) **BOOST AND BUCK APPARATUS AND SYSTEM**

(57)     Embodiments of the present application provides a boost and buck apparatus and a boost and buck system. The boost and buck apparatus includes: a boost and buck circuit configured to output a first output voltage under first control of a transistor controller, the first output voltage being greater than or less than a first input voltage, the first input voltage being a voltage of an external power battery, and the first output voltage being configured to supply power to an inverter of a vehicle motor; and a transistor controller configured to output the first control to the boost and buck circuit in response to that the vehicle is in a drive mode, and the first control being first on/off control of a controllable device of the boost and buck circuit.

FIG. 1

## Description

## CROSS-REFERENCE TO RELATED APPLICATIONS

The present application claims priority to Chinese Patent Application No. 202310026367.X, filed on January 9, 2023 and entitled "BOOST AND BUCK APPARATUS AND SYSTEM", the content of which shall be understood to be incorporated into the present application by reference.

## TECHNICAL FIELD

The embodiments of the present application relate to, but are not limited to, the technical field of power electronics, and in particular to a boost and buck apparatus and a boost and buck system.

## BACKGROUND

There are some apparatuses in power electronic equipment that achieve specific functions by increasing or decreasing the input voltage, which are usually called as boost apparatuses or buck apparatuses, and are represented in new energy vehicles as BOOST and BUCK. However, currently only the boost discharge function or the buck discharge function can be realized in the same apparatus.

## SUMMARY

The following is an overview of the subject matter described in detail herein, which is not intended to limit the scope of the claims.

Embodiments of the present application provides a boost and buck apparatus, applied to a new energy vehicle, including a boost and buck circuit and a transistor controller;

the boost and buck circuit is configured to output a first output voltage under first control of the transistor controller, the first output voltage is greater than or less than a first input voltage, the first input voltage is a voltage of an external power battery, and the first output voltage is configured to supply power to an inverter of a vehicle motor; and

the transistor controller is configured to output the first control to the boost and buck circuit in response to that the vehicle is in a drive mode, and the first control is the first on/off control of a controllable device of the boost and buck circuit.

In an embodiment, the boost and buck circuit is further configured to output a second output voltage under second control of the transistor controller, the second output voltage is greater than a second input voltage, the second input voltage is a voltage of an external charging station, and the second output voltage is configured to charge the external power battery; and the transistor controller is further configured to output the second control to the boost and buck circuit in response to that the vehicle is in a charging mode, and the second control is the second on/off control of the controllable device of the boost and buck circuit.

In an embodiment, the boost and buck circuit includes a first capacitance, an inductance, a diode, a first transistor, a second transistor, a third transistor, and a second capacitance;

a first end of the first capacitance serves as a first negative end of the boost and buck apparatus, a second end of the first capacitance serves as a first positive end of the boost and buck apparatus, a first end of the second capacitance serves as a second positive end of the boost and buck apparatus, and a second end of the second capacitance serves as a second negative end of the boost and buck apparatus; and

the first end of the first capacitance is respectively connected to an anode of the diode and a first end of the second transistor, a second end of the second transistor is respectively connected to a first end of the inductance and the first end of the second capacitance, the second end of the first capacitance is connected to a first end of the third transistor, a second end of the third transistor is respectively connected to a first end of the first transistor and a second end of the inductance, and a second end of the first transistor is respectively connected to a cathode of the diode and the second end of the second capacitance.

In an embodiment, in response to that the vehicle is in the drive mode, the first positive end of the boost and buck apparatus is connected to a positive electrode of the power battery and the first negative end of the boost and buck apparatus is connected to a negative electrode of the power battery, the transistor controller is configured to turn off the first transistor, turn on the second transistor and the third transistor, and control a first coefficient, so that in response to that the first coefficient is less than 1/2, a voltage between the second positive end and the second negative end of the boost and buck apparatus is less than a voltage of the power battery, and in response to that the first coefficient is greater than 1/2, the voltage between the second positive end and the second negative end of the boost and buck apparatus is greater than the voltage of the power battery; and
the first coefficient is a ratio of a turn-on time of the second transistor and the third transistor to a sum of the turn-on time of the second transistor and the third transistor and a turn-off time of the second transistor and the third transistor.

In an embodiment, in response to that the vehicle is in the charging mode, the second positive end of the boost and buck apparatus is connected to a positive electrode of the charging station and the second negative end of the boost and buck apparatus is connected to a negative electrode of the charging station, the transistor controller is configured to turn off the second transistor, turn on the first transistor and the third transistor in turn, and control a second coefficient, so that in response to that the second coefficient is greater than zero, a voltage between the first positive end and the first negative end of the boost and buck apparatus is greater than a voltage of the charging station; and
the second coefficient is a ratio of a turn-on-time of the first transistor to a sum of the turn-on-time of the first transistor and a turn-off-time of the first transistor.

Embodiments of the present application provides a boost and buck system, applied to a new energy vehicle, including a boost and buck apparatus, a switch, an inverter, a charging station, a power battery and a switch controller; the boost and buck apparatus includes a boost and buck circuit and a transistor controller;

the boost and buck circuit is configured to output a first output voltage under first control of the transistor controller, the first output voltage is greater than or less than a first input voltage, the first input voltage is a voltage of an external power battery, and the first output voltage is configured to supply power to an inverter of a vehicle motor; and

the transistor controller is configured to output the first control to the boost and buck circuit in response to that the vehicle is in a drive mode, and the first control is the first on/off control of a controllable device of the boost and buck circuit;

the switch controller is configured to shift the switch to an inverter side in response to that the vehicle is in the drive mode, so that the boost and buck apparatus is connected to the inverter; and

the switch controller is configured to shift the switch to a charging station side in response to that the vehicle is in the charging mode, so that the boost and buck apparatus is connected to the charging station.

In an embodiment, the boost and buck circuit is further configured to output a second output voltage under second control of the transistor controller, the second output voltage is greater than a second input voltage, the second input voltage is a voltage of an external charging station, and the second output voltage is configured to charge the external power battery; and the transistor controller is further configured to output the second control to the boost and buck circuit in response to that the vehicle is in a charging mode, and the second control is the second on/off control of the controllable device of the boost and buck circuit.

In an embodiment, the boost and buck circuit includes a first capacitance, an inductance, a diode, a first transistor, a second transistor, a third transistor, and a second capacitance;

a first end of the first capacitance serves as a first negative end of the boost and buck apparatus, a second end of the first capacitance serves as a first positive end of the boost and buck apparatus, a first end of the second capacitance serves as a second positive end of the boost and buck apparatus, and a second end of the second capacitance serves as a second negative end of the boost and buck apparatus; and

the first end of the first capacitance is respectively connected to an anode of the diode and a first end of the second transistor, a second end of the second transistor is respectively connected to a first end of the inductance and the first end of the second capacitance, the second end of the first capacitance is connected to a first end of the third transistor, a second end of the third transistor is respectively connected to a first end of the first transistor and a second end of the inductance, and a second end of the first transistor is respectively connected to a cathode of the diode and the second end of the second capacitance.

In an embodiment, in response to that the vehicle is in the drive mode, the first positive end of the boost and buck apparatus is connected to a positive electrode of the power battery and the first negative end of the boost and buck apparatus is connected to a negative electrode of the power battery, the transistor controller is configured to turn off the first transistor, turn on the second transistor and the third transistor, and control a first coefficient, so that in response to that the first coefficient is less than 1/2, a voltage between the second positive end and the second negative end of the boost and buck apparatus is less than a voltage of the power battery, and in response to that the first coefficient is greater than 1/2, the voltage between the second positive end and the second negative end of the boost and buck apparatus is greater than the voltage of the power battery; and
the first coefficient is a ratio of a turn-on time of the second transistor and the third transistor to a sum of the turn-on time of the second transistor and the third transistor and a turn-off time of the second transistor and the third transistor.

In an embodiment, in response to that the vehicle is in the charging mode, the second positive end of the boost and buck apparatus is connected to a positive electrode of the charging station and the second negative end of the boost and buck apparatus is connected to a negative electrode of the charging station, the transistor controller is configured to turn off the second transistor, turn on the first transistor and the third transistor in turn, and control a second coefficient, so that in response to that the second coefficient is greater than zero, a voltage between the first positive end and the first negative end of the boost and buck apparatus is greater than a voltage of the charging station; and

the second coefficient is a ratio of a turn-on-time of the first transistor to a sum of the turn-on-time of the first transistor and a turn-off-time of the first transistor.

In an embodiment, the switch includes a first switch and a second switch, and each switch includes a fixed end, a first moving end, and a second moving end;

a fixed end of the first switch is connected to the second positive end of the boost and buck apparatus, a first moving end of the first switch is connected to the positive electrode of the charging station, and a second moving end of the first switch is connected to an input end of a positive electrode of the inverter; and

a fixed end of the second switch is connected to the second negative end of the boost and buck apparatus, a first moving end of the second switch is connected to the negative electrode of the charging station, and a second moving end of the second switch is connected to an input end of a negative electrode of the inverter.

In an embodiment, the switch controller is configured to connect the fixed end of the first switch to the second moving end of the first switch and connect the fixed end of the second switch to the second moving end of the second switch in response to that the vehicle is in the drive mode, and configured to connect the fixed end of the first switch to the first moving end of the first switch and connect the fixed end of the second switch to the first moving end of the second switch in response to the vehicle is in the charging mode.

Other aspects can be understood after reading and understanding the accompanying drawings and detailed descriptions.

## BRIEF DESCRIPTION OF THE DRAWINGS

The accompanying drawings are used to provide an understanding of the technical solution of the present application and constitute a part of the specification. Together with the embodiments of the present application, they are used to explain the technical solution of the present application and do not constitute a limitation on the technical solution of the present application.

FIG. 1 is a schematic diagram of a boost and buck apparatus according to an embodiment of the present application.

FIG. 2 is a schematic diagram of a boost and buck system according to an embodiment of the present application.

FIG. 3 is a schematic diagram of another boost and buck system according to an embodiment of the present application.

FIG. 4 is a schematic structural diagram of the buck-boost apparatus in the system shown in FIG. 3.

FIG. 5 is a schematic circuit diagram where $S_2$ and $S_3$ are turned on and $S_1$ is turned off in the system shown in FIG. 3.

FIG. 6 is a schematic circuit diagram where $S_3$ and $S_2$ are turned off and $S_1$ is turned on in the system shown in FIG. 3.

FIG. 7 is a schematic circuit diagram where $S_3$ and $S_2$ are turned off and $S_1$ is turned on in the system shown in FIG. 3.

FIG. 8 is a schematic circuit diagram where $S_1$ is turned off and $S_3$ and $S_2$ are turned on in the system shown in FIG. 3.

## DETAILED DESCRIPTION OF THE EMBODIMENTS

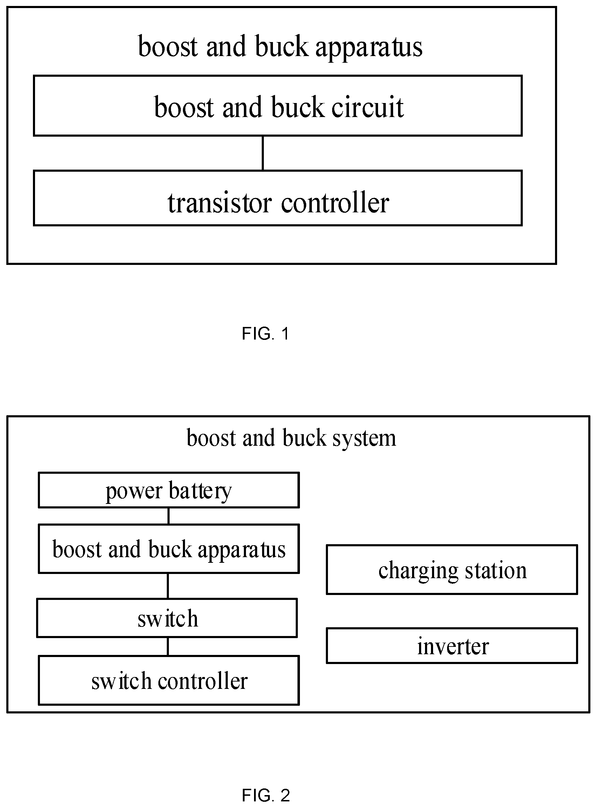

FIG. 1 is a schematic diagram of a boost and buck apparatus according to an embodiment of the present application. As shown in FIG. 1, the boost and buck apparatus of this embodiment is applied to a new energy vehicle. The boost and buck apparatus includes a boost and buck circuit and a transistor controller.

The boost and buck circuit is configured to output a first output voltage under the first control of the transistor controller, and the first output voltage is greater than or less than the first input voltage. The first input voltage is the voltage of an external power battery, and the first output voltage is configured to supply power to the inverter of the vehicle motor.

The transistor controller is configured to output first control to the boost and buck circuit in response to that the vehicle is in a drive mode. The first control refers to the first on/off control of the controllable device of the boost and buck circuit.

In an embodiment, the boost and buck circuit is further configured to output a second output voltage under the second control of the transistor controller, and the second output voltage is greater than the second input voltage. The second input voltage is the voltage of the external charging station, and the second output voltage is configured to charge the external power battery.

The transistor controller is further configured to output second control to the boost and buck circuit in response to that the vehicle is in the charging mode. The second control refers to the second on/off control of the controllable device of the boost and buck circuit.

In an embodiment, the boost and buck circuit includes a first capacitance, an inductance, a diode, a first transistor, a second transistor, a third transistor, and a second capacitance.

The first end of the first capacitance serves as the first negative end of the boost and buck apparatus, the second end of the first capacitance serves as the first positive end of the boost and buck apparatus, the first end of the second capacitance serves as the second positive end of the boost and buck apparatus, and the second end of the second capacitance serves as the second negative end of the boost and buck apparatus.

The first end of the first capacitance is respectively connected to the anode of the diode and the first end of the second transistor, the second end of the second transistor is respectively connected to the first end of the inductance and the first end of the second capacitance, the second end of the first capacitance is connected to the first end of the third transistor, the second end of the third transistor is respectively connected to the first end of the first transistor and the second end of the inductance, and the second end of the first transistor is respectively connected to the cathode of the diode and the second end of the second capacitance.

In an embodiment, in response to that the vehicle is in the drive mode, that is, the first positive end of the boost and buck apparatus is connected to the positive electrode of the power battery and the first negative end of the boost and buck apparatus is connected to the negative electrode of the power battery, the transistor controller is configured to turn off the first transistor, and turn on the second transistor and the third transistor, and control the first coefficient In this way, in response to that the first coefficient is less than 1/2, the voltage between the second positive end and the second negative end of the boost and buck apparatus is less than the voltage of the power battery; in response to that the first coefficient is greater than 1/2, the voltage between the second positive end and the second negative end of the boost and buck apparatus is greater than the voltage of the power battery.

The first coefficient refers to the ratio of the turn-on-time of the second transistor and the third transistor to the sum of the turn-on-time of the second transistor and the third transistor and the turn-off-time of the second transistor and the third transistor.

The first control may refer to turning off the first transistor, turning on the second transistor and the third transistor, and controlling the first coefficient. Controlling the first coefficient may refer to controlling the turn-on-time of the second transistor and the third transistor.

In an embodiment, the first transistor, the second transistor, and the third transistor may be silicon carbide thyristors. At this time, the first end of the transistor may be the anode of the silicon carbide thyristor, the second end may be the cathode of the silicon carbide thyristor, and the gate electrode of the silicon carbide thyristor serves as the control electrode.

In an embodiment, the first transistor, the second transistor, and the third transistor may be silicon carbide triodes. At this time, the first end of the transistor may be the source electrode/drain electrode of the silicon carbide triode, the second end may be the drain electrode/source electrode of the silicon carbide triode, and the gate electrode of the silicon carbide triode serves as the control electrode.

For example, the first coefficient is

$$D_d = \frac{t_{on1}}{t_{on1}+t_{off1}}$$ , where $t_{on1}$ is the turn-on-time of the third transistor and the second transistor, and $t_{off1}$ is the turn-off-time of the third transistor and the second transistor. The third transistor and the second transistor are turned on at the same time and turned off at the same time. The relationship between the voltage $U_0$ between the second positive end and the second negative end of the boost and buck apparatus and the voltage $U_{in}$ between the first positive end and the first negative end of the boost and buck apparatus is as follows:

$$U_o = \frac{D_d}{(1-D_d)}U_{in}$$ .

In an embodiment, in response to that the vehicle is in the charging mode, that is, the second positive end of the boost and buck apparatus is connected to the positive electrode of the charging station and the second negative end of the boost and buck apparatus is connected to the negative electrode of the charging station, the transistor controller is configured to turn off the second transistor, and turn on the first transistor and the third transistor in turn, and control the second coefficient. In this way, in response to that the second coefficient is greater than zero, the voltage between the first positive end and the first negative end of the boost and buck apparatus is greater than the voltage of the charging station.

The second coefficient refers to the ratio of the turn-on-time of the first transistor to the sum of the turn-on-time of the first transistor and the turn-off-time of the first transistor.

The second control may refer to turning off the second transistor, turning on the first transistor and the third transistor in turn, and controlling the second coefficient. Controlling the second coefficient may refer to controlling the turn-on-time of the first transistor. For example, the second coefficient is $$D_g = \frac{t_{on1}}{t_{on1}+t_{off1}}$$ , where $t_{on1}$ is the turn-on-time of the first transistor and $t_{off1}$ is the turn-off-time of the first transistor. The relationship between the voltage $U_0$ between the second positive end and the second negative end of the boost and buck apparatus and the voltage $U_{in}$ between the first positive end and the first negative end of the boost and buck apparatus is as follows:

$$U_{in} = \frac{1}{1-D_g}U_o$$ .

The boost and buck apparatus in the present application can realize both the boost discharge function and the buck discharge function in the same apparatus.

FIG. 2 is a schematic diagram of a boost and buck system according to an embodiment of the present application. As shown in FIG. 2, the boost and buck system includes a boost and buck apparatus, a switch, an inverter, a charging station, a power battery and a switch controller. The boost and buck apparatus includes a boost and buck circuit and the transistor controller.

The boost and buck circuit is configured to output a first output voltage under the first control of the transistor controller, and the first output voltage is greater than or less than the first input voltage. The first input voltage is the voltage of the power battery, and the first output voltage is configured to supply power to the inverter of the vehicle motor.

The transistor controller is configured to output first control to the boost and buck circuit in response to that the vehicle is in the drive mode. The first control refers to the first on/off control of the controllable device of the boost and buck circuit.

The switch controller is configured to shift the switch to the inverter side in response to that the vehicle is in the drive mode, so that the boost and buck apparatus is connected to the inverter. In response to that the vehicle is in the charging mode, the switch is shifted to the charging station side, so that the boost and buck apparatus is connected to the charging station.

In an embodiment, the boost and buck circuit is further configured to output a second output voltage under the second control of the transistor controller, and the second output voltage is greater than the second input voltage. The second input voltage is the voltage of the charging station, and the second output voltage is configured to charge the power battery.

The transistor controller is further configured to output second control to the boost and buck circuit in response to that the vehicle is in the charging mode. The second control refers to the second on/off control of the controllable device of the boost and buck circuit.

In an embodiment, the boost and buck circuit includes a first capacitance, an inductance, a diode, a first transistor, a second transistor, a third transistor, and a second capacitance.

The first end of the first capacitance serves as the first negative end of the boost and buck apparatus, the second end of the first capacitance serves as the first positive end of the boost and buck apparatus, the first end of the second capacitance serves as the second positive end of the boost and buck apparatus;, and the second end of the second capacitance serves as the second negative end of the boost and buck apparatus.

The first end of the first capacitance is respectively connected to the anode of the diode and the first end of the second transistor, the second end of the second transistor is respectively connected to the first end of the inductance and the first end of the second capacitance, the second end of the first capacitance is connected to the first end of the third transistor, the second end of the third transistor is respectively connected to the first end of the first transistor and the second end of the inductance, and the second end of the first transistor is respectively connected to the cathode of the diode and the second end of the second capacitance.

In an embodiment, the first transistor, the second transistor, and the third transistor may be silicon carbide thyristors. At this time, the first end of the transistor can be the anode of the silicon carbide thyristor, the second end can be the cathode of the silicon carbide thyristor, and the gate electrode of the silicon carbide thyristor serves as the control electrode.

In an embodiment, the first transistor, the second transistor, and the third transistor can be silicon carbide triodes. At this time, the first end of the transistor can be the source electrode/drain electrode of the silicon carbide triode, the second end can be the drain electrode/source electrode of the silicon carbide triode, and the gate electrode of the silicon carbide triode serves as the control electrode.

In an embodiment, in response to that the vehicle is in the drive mode, that is, the first positive end of the boost and buck apparatus is connected to the positive electrode of the power battery and the first negative end of the boost and buck apparatus is connected to the negative electrode of the power battery, the transistor controller is configured to turn off the first transistor, turn on the second transistor and the third transistor, and control the first coefficient. In this way, in response to that the first coefficient is less than 1/2, the voltage between the second positive end and the second negative end of the boost and buck apparatus is less than the voltage of the power battery; in response to that the first coefficient is greater than 1/2, the voltage between the second positive end and the second negative end of the boost and buck apparatus is greater than the voltage of the power battery.

The first coefficient refers to the ratio of the turn-on-time of the second transistor and the third transistor to the sum of the turn-on-time of the second transistor and the third transistor, and the turn-off-time of the second transistor and the third transistor.

The first control may refer to turning off the first transistor, turning on the second transistor and the third transistor, and controlling the first coefficient. Controlling the first coefficient may refer to controlling the turn-on-time of the second transistor and the third transistor.

In an embodiment, in response to that the vehicle is in the charging mode, that is, the second positive end of the boost and buck apparatus is connected to the positive electrode of the charging station and the second negative end of the boost and buck apparatus is connected to the negative electrode of the charging station, the transistor controller is specifically configured to turn off the second transistor, turn on the first transistor and the third transistor in turn, and control the second coefficient. In this way, in response to that the second coefficient is greater than zero, the voltage between the first positive end and the first negative end of the boost and buck apparatus is greater than the voltage of the charging station.

The second coefficient refers to the ratio of the turn-on-time of the first transistor to the sum of the turn-on-time of the first transistor and the turn-off-time of the first transistor.

The second control may refer to turning off the second transistor, turning on the first transistor and the third transistor in turn, and controlling the second coefficient. Controlling the second coefficient may refer to controlling the turn-on-time of the first transistor.

In an embodiment, two switches, including a first switch and a second switch are provided, and each of the switches includes a fixed end, a first moving end, and a second moving end.

The fixed end of the first switch is connected to the second positive end of the boost and buck apparatus, the first moving end of the first switch is connected to the positive electrode of the charging station, and the second moving end of the first switch is connected to the positive electrode input end of the inverter.

The fixed end of the second switch is connected to the second negative end of the boost and buck apparatus, the first moving end of the second switch is connected to the negative electrode of the charging station, and the second moving end of the second switch is connected to the negative electrode input end of the inverter.

In an embodiment, the switch controller is configured to connect the fixed end of the first switch to the second moving end of the first switch and the fixed end of the second switch to the second moving end of the second switch in response to that the vehicle is in the drive mode; and configured to connect the fixed end of the first switch to the first moving end of the first switch and the fixed end of the second switch to the first moving end of the second switch in response to that the vehicle is in the charging mode.

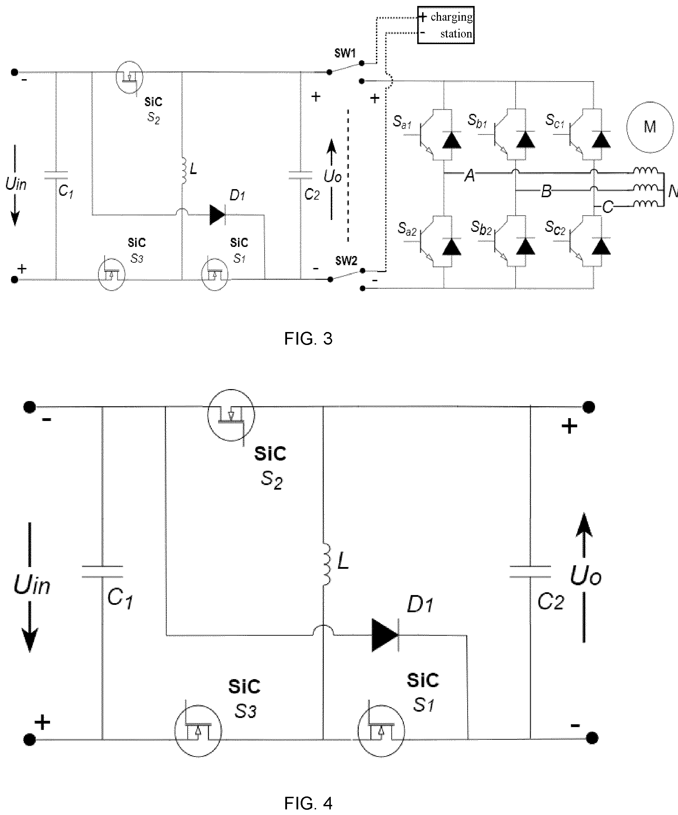

FIG. 3 is a schematic diagram of another boost and buck system according to an embodiment of the present application. As shown in FIG. 3, $U_{in}$ is the input voltage (i.e., the output voltage of the power battery) in the drive mode, $U_o$ is the output voltage, $D_1$ is the diode, $S_1$, $S_2$, and $S_3$ are the silicon carbide (SiC) thyristors (SiC can be bidirectionally conductive), L is the inductance, $C_1$ and $C_2$ are the vehicle film capacitance, and $S_{a1}$ and $S_{a2}$ are the two thyristor IGBT groups on the corresponding half bridge of the three-phase motor A. Similarly, $S_{b1}$ and $S_{b2}$ corresponds to the B phase, and $S_{c1}$, and corresponds to the C phase. The stator winding of the three-phase motor M is a star connection, where point N is the neutral point of the three-phase winding. In response to that the switches SW1 and SW2 are set to the upper position, the whole vehicle is in the charging mode and is connected to the charging station, and the charging station charges the power battery; in response to that the switches SW1 and SW2 are set to the lower position, the whole vehicle is in the drive mode and is connected to the inverter of the motor, and the input voltage is input to the motor.

The boost and buck circuit shown in FIG. 4 includes a capacitance C1, a capacitance C2, a thyristor S1, a thyristor S2, a thyristor S3, a diode D1, and an inductance L. The voltage of capacitance C2 is $U_0$.

In the drive mode, the BOOST/BUCK function is described as follows:

At this time, the voltage $U_o$ is output by the power battery $U_{in}$ after being boosted and reduced, and the control method of $S_1$, $S_2$ and $S_3$ is as follows:

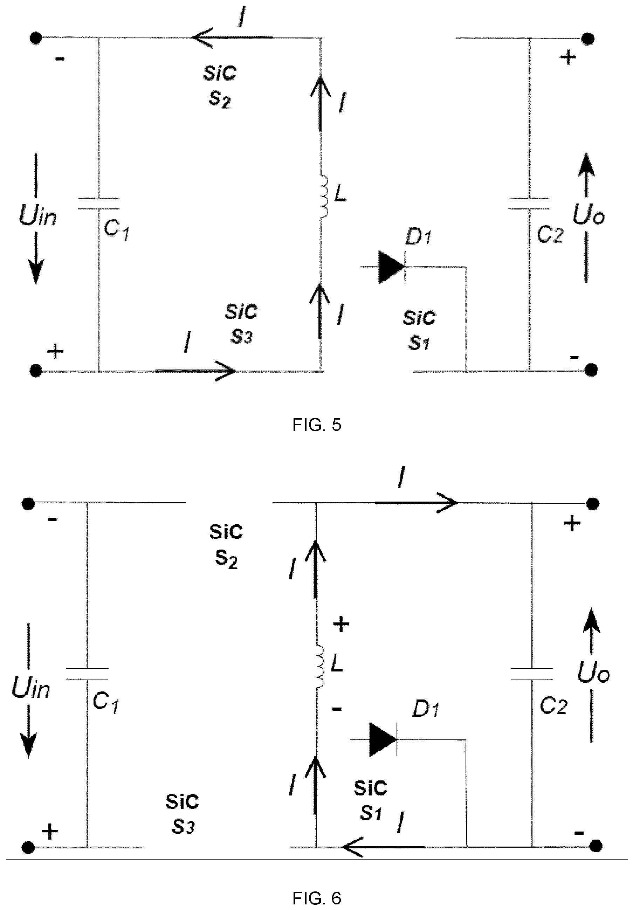

> in response to that $S_2$ and $S_3$ are turned on and $S_1$ is turned off, the inductance L stores energy, as shown in FIG. 5 below, and the flow direction of the current I is marked in the figure;

> in response to that $S_2$ and $S_3$ are turned off and $S_1$ is turned on, the inductance L releases energy, and the circuit is shown in FIG. 6.

The control method is described as follows:

the switching frequencies of the three silicon carbide thyristors $S_1$, $S_2$ and $S_3$ are the same, that is, the switching cycles $T_d$ are the same (d represents Driving). The control duty cycle of $S_2$ and $S_3$ is $D_d$, and the duty cycle of $S_1$ is $(1-D_d)$. That is, in response to that $S_3$ and $S_2$ are turned on, $S_1$ is turned off; and in response to that $S_3$ and $S_2$ are turned off, $S_1$ is turned on, which are complementary.

The calculation relationship of the voltage $U_{in}$ and $U_o$ is as follows:

> in response to that $S_3$ and $S_2$ are turned on and $S_1$ is turned off, the inductance L stores energy from $U_{in}$ and the current flowing through L is:

$$i_L^+ = \int_0^{t_{on1}} \frac{U_{in}}{L} dt;$$

> in response to that $S_3$ and $S_2$ are turned off and $S_1$ is turned on, the inductance L releases the stored energy, and the current flowing through L is:

$$i_L^- = \int_0^{t_{off1}} \frac{U_o}{L} dt.$$

According to the principle of current continuity,

$$i_L^+ = i_L^-;$$

Then,

$$\frac{U_{in}}{L} t_{on1} = \frac{U_o}{L} t_{off1};$$

$$\frac{U_{in}}{U_o} = \frac{t_{off1}}{t_{on1}}.$$

$$D_d = \frac{t_{on1}}{t_{on1}+t_{off1}},$$

where $t_{on1}$ is the turned-on time of $S_3$ and $S_2$, $t_{off1}$ is the turned-off time of $S_3$ and $S_2$, and

$$\frac{U_o}{U_{in}+U_o} = D_d;$$

First formula:

$$U_o = \frac{D_d}{(1-D_d)} U_{in}$$

Thus in response to that $D_d < \frac{1}{2}$, $U_o < U_{in}$, and the Buck function is realized; and

in response to that $D_d > \frac{1}{2}$, $U_o > U_{in}$, and the Boost function is realized.

In the charging or energy recovery mode, the Boost function is described as follows:
In this mode, $U_o$ charges the battery pack $U_{in}$ as the energy input end, $S_2$ is in a normal turn-off state. The control method of $S_1$ and $S_3$ is as follows:

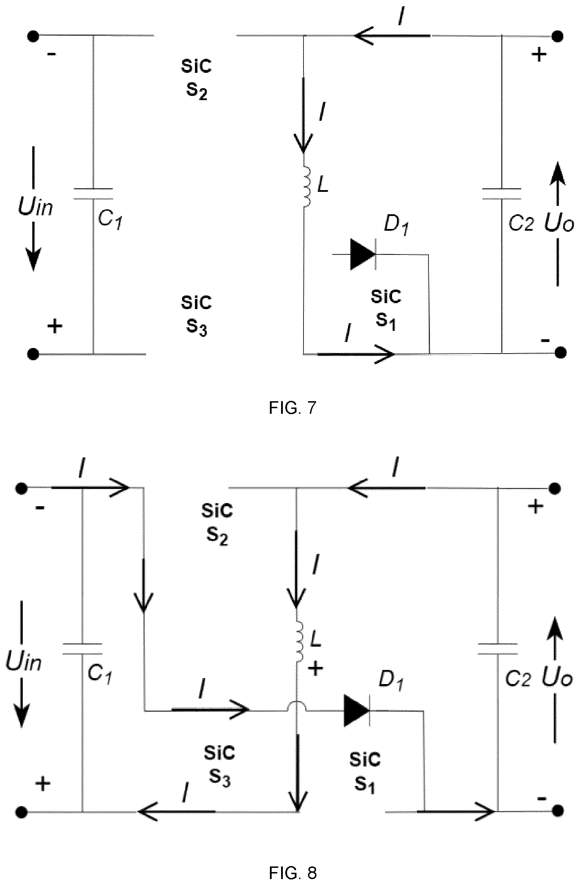

in response to that $S_3$ and $S_2$ are turned off and $S_1$ is turned on, the inductance L is provided with energy. The schematic diagram is shown in FIG. 7;
in response to that $S_1$ and $S_2$ are turned off and $S_3$ is turned on, $U_{in}$ is charged. The schematic diagram is shown in FIG. 8.

The description of the control method:
Among the three silicon carbide thyristors, $S_2$ is in a normal turn-off state in this mode, the switching frequencies of $S_1$ and $S_3$ are the same, that is, the switching cycles $T_g$ are the same (g represents Generating). The duty cycle of $S_1$ is $D_g$ and the duty cycle of $S_3$ is $(1-D_g)$. That is, in response to that $S_1$ is turned on, $S_3$ is turned off; and in response to that $S_1$ is turned off, and $S_3$ is turned on, which are complementary.

The calculation relationship between voltage $U_{in}$ and $U_o$ is as follows:

in response to that $S_1$ is turned on and $S_3$ is turned off, the inductance L stores the energy of the power supply $U_o$, and the current flowing through L is:

$$i_L^+ = \int_0^{t_{on2}} \frac{U_o}{L} dt;$$

in response to that $S_1$ is turned off and $S_3$ is turned on, the inductance L releases the stored energy, and the current flowing through L is:

$$i_L^- = \int_0^{t_{off2}} \frac{U_{in}-U_o}{L} dt.$$

According to the continuity principle of current,

$$i_L^+ = i_L^-.$$

Then,

$$\frac{U_o}{L} t_{on2} = \frac{U_{in}-U_o}{L} t_{off2};$$

$$\frac{U_o}{U_{in}-U_o} = \frac{t_{off2}}{t_{on2}};$$

$$\frac{U_{in}-U_o}{U_{in}} = \frac{t_{on2}}{t_{on2}+t_{off2}}.$$

$$D_g = \frac{t_{on2}}{t_{on2}+t_{off2}},$$

where $t_{on2}$ is the turn-on-time of $S_1$, $t_{off2}$ is the turn-off-time of $S_1$, then:

$$U_{in} = \frac{1}{1-D_g} U_o$$

second formula:

From the above formula, it can be seen that under the condition where $U_o$ is constant, $U_{in}$ increases with the increase of $D_g$.

As can be seen from the above, in response to that the car equipped with this apparatus is in the drive mode, the bus voltage input to the inverter can be boosted and bucked by controlling the conduction duty cycle of the specific SiC in the buck-boost apparatus, and the target value of the buck-boost is calculated according to the first formula.

In response to that the car equipped with this apparatus is in the charging or energy recovery mode, the voltage input to the power battery can be boosted and charged by controlling the conduction duty cycle of the specific SiC in the buck-boost apparatus, and the target value of the boost is calculated according to the second formula.

The present application describes multiple embodiments, but the description is rather than restrictive. It is obvious to those skilled in the art that there may be more embodiments and implementations within the scope of the embodiments described in the present application. Although many possible combinations of features are shown in the drawings and discussed in the specific embodiments, many other combinations of the disclosed features are also possible. Unless specifically limited, any feature or element of any embodiment may be used in combination with any other feature or element in any other embodiment, or may replace any other feature or element in any other embodiment.

Any features shown and/or discussed in the embodiments of the present application may be implemented individually or in any appropriate combination.

In addition, when describing representative embodiments, the specification may have presented the method and/or process as a specific sequence of steps. However, to the extent that the method or process does not rely on the specific order of the steps described herein, the method or process should not be limited to the steps in the specific order described. As will be understood by those skilled in the art, other sequences of steps are also possible.

Those skilled in the art will understand that all or some of the steps, systems, and functional modules/units in the apparatus disclosed above may be implemented as software, firmware, hardware, and appropriate combinations thereof. In hardware implementations, the division between the functional modules/units mentioned in the above description does not necessarily correspond to the division of physical components. For example, a physical component may have multiple functions, or a function or step may be performed by several physical components in cooperation. Some or all components may be implemented as software executed by a processor, such as a digital signal processor or a microprocessor, or implemented as hardware, or implemented as an integrated circuit, such as a dedicated integrated circuit. Such software may be distributed on computer-readable media, which may include computer storage media (or non-transitory media) and communication media (or transient media). As is known to those skilled in the art, the term computer storage media includes volatile and nonvolatile, removable and non-removable media implemented in any method or technology that is configured to store information (such as computer-readable instructions, data structures, program modules, or other data). The computer storage media include, but are not limited to, RAM, ROM, EEPROM, flash memory or other memory technology, CD-ROM, digital versatile disk (DVD) or other optical disk storage, magnetic cassettes, magnetic tapes, magnetic disk storage or other magnetic storage apparatus, or any other medium that can be configured to store the desired information and can be accessed by a computer. In addition, it is known to those skilled in the art that the communication media typically contain computer-readable instructions, data structures, program modules, or other data in a modulated data signal such as a carrier wave or other transport mechanism, and may include any information delivery media.

**Claims**

1. A boost and buck apparatus, applied to a new energy vehicle, **characterized by** comprising a boost and buck circuit and a transistor controller, wherein:

the boost and buck circuit is configured to output a first output voltage under first control of the transistor controller, the first output voltage is greater than or less than a first input voltage, the first input voltage is a voltage of an external power battery, and the first output voltage is configured to supply power to an inverter of a vehicle motor; and
the transistor controller is configured to output the first control to the boost and buck circuit in response to that the vehicle is in a drive mode, and the first control is first on/off control of a controllable device of the boost and buck circuit.

2. The boost and buck apparatus according to claim 1, wherein:

the boost and buck circuit is further configured to output a second output voltage under second control of the transistor controller, the second output voltage is greater than a second input voltage, the second input voltage is a voltage of an external charging station, and the second output voltage is configured to charge the external power battery; and
the transistor controller is further configured to output the second control to the boost and buck circuit in response to that the vehicle is in a charging mode, and the second control is second on/off control of the controllable device of the boost and buck circuit.

3. The boost and buck apparatus according to claim 1 or 2, wherein:

the boost and buck circuit comprises a first capacitance, an inductance, a diode, a first transistor, a second transistor, a third transistor, and a second capacitance;
a first end of the first capacitance serves as a first negative end of the boost and buck apparatus, a second end of the first capacitance serves as a first positive end of the boost and buck apparatus, a first end of the second capacitance serves as a second positive end of the boost and buck apparatus, and a second end of the second capacitance serves as a second negative end of the boost and buck apparatus; and
the first end of the first capacitance is respectively connected to an anode of the diode and a first end of the second transistor, a second end of the second transistor is respectively connected to a first end of the inductance and the first end of the second capacitance, the second end of the first capacitance is connected to a first end of the third transistor, a second end of the third transistor is respectively connected to a first end of the first transistor and a second end of the inductance, and a second end of the first transistor is respectively connected to a cathode of the diode and the second end of the second capacitance.

4. The boost and buck apparatus according to claim 3, wherein:

in response to that the vehicle is in the drive mode, the first positive end of the boost and buck apparatus is connected to a positive electrode of the power battery and the first negative end of the boost and buck apparatus is connected to a negative electrode of the power battery, the transistor controller is configured to turn off the first transistor, turn on the second transistor and the third transistor, and control a first coefficient, so that in response to that the first coefficient is less than 1/2, a voltage between the second positive end and the second negative end of the boost and buck apparatus is less than a voltage of the power battery, and in response to that the first coefficient is greater than 1/2, the voltage between the second positive end and the second negative end of the boost and buck apparatus is greater than the voltage of the power battery; and the first coefficient is a ratio of a turn-on time of the second transistor and the third transistor to a sum of the turn-on time of the second transistor and the third transistor and a turn-off time of the second transistor and the third transistor.

5. The boost and buck apparatus according to claim 3, wherein:

in response to that the vehicle is in the charging mode, the second positive end of the boost and buck apparatus is connected to a positive electrode of the charging station and the second negative end of the boost and buck apparatus is connected to a negative electrode of the charging station, the transistor controller is configured to turn off the second transistor, turn on the first transistor and the third transistor in turn, and control a second coefficient, so that in response to that the second coefficient is greater than zero, a voltage between the first positive end and the first negative end of the boost and buck apparatus is greater than a voltage of the charging station; and the second coefficient is a ratio of a turn-on-time of the first transistor to a sum of the turn-on-time of the first transistor and a turn-off-time of the first transistor.

6. A boost and buck system, applied to a new energy vehicle, **characterized by** comprising a boost and buck apparatus, a switch, an inverter, a charging station, a power battery and a switch controller, wherein:

the boost and buck apparatus comprises a boost and buck circuit and a transistor controller; the boost and buck circuit is configured to output a first output voltage under first control of the transistor controller, the first output voltage is greater than or less than a first input voltage, the first input voltage is a voltage of an external power battery, and the first output voltage is configured to supply power to an inverter of a vehicle motor; and the transistor controller is configured to output the first control to the boost and buck circuit in response to that the vehicle is in a drive mode, and the first control is first on/off control of a controllable device of the boost and buck circuit; the switch controller is configured to shift the switch to an inverter side in response to that the vehicle is in the drive mode, so that the boost and buck apparatus is connected to the inverter; and the switch controller is configured to shift the switch to a charging station side in response to that the vehicle is in the charging mode, so that the boost and buck apparatus is connected to the charging station.

7. The boost and buck system according to claim 6, wherein:

the boost and buck circuit is further configured to output a second output voltage under second control of the transistor controller, the second output voltage is greater than a second input voltage, the second input voltage is a voltage of an external charging station, and the second output voltage is configured to charge the external power battery; and the transistor controller is further configured to output the second control to the boost and buck circuit in response to that the vehicle is in a charging mode, and the second control is second on/off control of the controllable device of the boost and buck circuit.

8. The boost and buck system according to claim 6 or 7, wherein:

the boost and buck circuit comprises a first capacitance, an inductance, a diode, a first transistor, a second transistor, a third transistor, and a second capacitance; a first end of the first capacitance serves as a first negative end of the boost and buck apparatus, a second end of the first capacitance serves as a first positive end of the boost and buck apparatus, a first end of the second capacitance serves as a second positive end of the boost and buck apparatus, and a second end of the second capacitance serves as a second negative end of the boost and buck apparatus; and
the first end of the first capacitance is respectively connected to an anode of the diode and a first end of the second transistor, a second end of the second transistor is respectively connected to a first end of the inductance and the first end of the second capacitance, the second end of the first capacitance is connected to a first end of the third transistor, a second end of the third transistor is respectively connected to a first end of the first transistor and a second end of the inductance, and a second end of the first transistor is respectively connected to a cathode of the diode and the second end of the second capacitance.

9. The boost and buck system according to claim 7, wherein:

in response to that the vehicle is in the drive mode, the first positive end of the boost and buck apparatus is connected to a positive electrode of the power battery and the first negative end of the boost and buck apparatus is connected to a negative electrode of the power battery, the transistor controller is configured to turn off the first transistor, turn on the second transistor and the third transistor, and control a first coefficient, so that in response to that the first coefficient is less than 1/2, a voltage between the second positive end and the second negative end of the boost and buck apparatus is less than a voltage of the power battery, and in response to that the first coefficient is greater than 1/2, the voltage between the second positive end and the second negative end of the boost and buck apparatus is greater than the voltage of the power battery; and
the first coefficient is a ratio of a turn-on time of the second transistor and the third transistor to a sum of the turn-on time of the second transistor and the third transistor and a turn-off time of the second transistor and the third transistor.

10. The boost and buck system according to claim 7, wherein:

in response to that the vehicle is in the charging mode, the second positive end of the boost and buck apparatus is connected to a positive electrode of the charging station and the second negative end of the boost and buck apparatus is connected to a negative electrode of the charging station, the transistor controller is configured to turn off the second transistor, turn on the first transistor and the third transistor in turn, and control a second coefficient, so that in response to that the second coefficient is greater than zero, a voltage between the first positive end and the first negative end of the boost and buck apparatus is greater than a voltage of the charging station; and
the second coefficient is a ratio of a turn-on-time of the first transistor to a sum of the turn-on-time of the first transistor and a turn-off-time of the first transistor.

11. The boost and buck system according to claim 8, wherein:

the switch comprises a first switch and a second switch, and each switch comprises a fixed end, a first moving end, and a second moving end;
a fixed end of the first switch is connected to the second positive end of the boost and buck apparatus, a first moving end of the first switch is connected to the positive electrode of the charging station, and a second moving end of the first switch is connected to an input end of a positive electrode of the inverter; and
a fixed end of the second switch is connected to the second negative end of the boost and buck apparatus, a first moving end of the second switch is connected to the negative electrode of the charging station, and a second moving end of the second switch is connected to an input end of a negative electrode of the inverter.

12. The boost and buck system of claim 11, wherein the switch controller is configured to connect the fixed end of the first switch to the second moving end of the first switch and connect the fixed end of the second switch to the second moving end of the second switch in response to that the vehicle is in the drive mode, and configured to connect the fixed end of the first switch to the first moving end of the first switch and connect the fixed end of the second switch to the first moving end of the second switch in response to the vehicle is in the charging mode.

boost and buck apparatus

boost and buck circuit

transistor controller

FIG. 1

boost and buck system

power battery

boost and buck apparatus

switch

switch controller

charging station

inverter

FIG. 2

FIG. 3

FIG. 4

FIG. 5

FIG. 6

FIG. 7

FIG. 8

# INTERNATIONAL SEARCH REPORT

| International application No. |
| --- |
| **PCT/CN2023/128853** |

| A. | CLASSIFICATION OF SUBJECT MATTER |
| --- | --- |
| | H02M3/158(2006.01)i |

According to International Patent Classification (IPC) or to both national classification and IPC

| B. | FIELDS SEARCHED |
| --- | --- |

Minimum documentation searched (classification system followed by classification symbols)

IPC: H02M; H02J

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI; IEEE: 升压, 降压, 逆变器, 车, 电池, 电感, 二极管, 晶体管, 充电, boost, buck, inverter, vehicle, battery, inductor, diode, transistor, charge

| C. | DOCUMENTS CONSIDERED TO BE RELEVANT | |
| --- | --- | --- |
| Category* | Citation of document, with indication, where appropriate, of the relevant passages | Relevant to claim No. |
| PX | CN 116073660 A (WUXI XINGQU POWER TECHNOLOGY CO., LTD. et al.) 05 May 2023 (2023-05-05) description, paragraphs 34-130, and figures 1-8 | 1-12 |
| X | CN 115071459 A (HOZON NEW ENERGY AUTOMOBILE CO., LTD.) 20 September 2022 (2022-09-20) description, paragraphs 19-51, and figures 1-8 | 1-2, 6-7 |
| A | CN 115071459 A (HOZON NEW ENERGY AUTOMOBILE CO., LTD.) 20 September 2022 (2022-09-20) description, paragraphs 19-51, and figures 1-8 | 3-5, 8-12 |
| X | CN 106817035 A (SAMSUNG ELECTRONICS CO., LTD. et al.) 09 June 2017 (2017-06-09) description, paragraphs 51-78, and figures 3-9 | 1-2, 6-7 |
| A | CN 106817035 A (SAMSUNG ELECTRONICS CO., LTD. et al.) 09 June 2017 (2017-06-09) description, paragraphs 51-78, and figures 3-9 | 3-5, 8-12 |
| X | CN 210041651 U (YIBIN COWIN AUTOMOBILE CO., LTD.) 07 February 2020 (2020-02-07) description, paragraphs 8-42, and figure 1 | 1 |

| ✓ Further documents are listed in the continuation of Box C. | ✓ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **12 January 2024** | **20 January 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2023/128853** |

### C.    DOCUMENTS CONSIDERED TO BE RELEVANT

| Category* | Citation of document, with indication, where appropriate, of the relevant passages | Relevant to claim No. |
|---|---|---|
| A | CN 109088542 A (JIANGSU COLLEGE OF ENGINEERING AND TECHNOLOGY) 25 December 2018 (2018-12-25)<br>entire document | 1-12 |
| A | US 2007216319 A1 (YUAN ZE UNIVERSITY) 20 September 2007 (2007-09-20)<br>entire document | 1-12 |

Form PCT/ISA/210 (second sheet) (July 2022)

INTERNATIONAL SEARCH REPORT

Information on patent family members

International application No.

**PCT/CN2023/128853**

| Patent document cited in search report | | | Publication date (day/month/year) | Patent family member(s) | | | Publication date (day/month/year) |
|---|---|---|---|---|---|---|---|
| CN | 116073660 | A | 05 May 2023 | None | | | |
| CN | 115071459 | A | 20 September 2022 | None | | | |
| CN | 106817035 | A | 09 June 2017 | US | 2017150860 | A1 | 01 June 2017 |
| | | | | US | 10085607 | B2 | 02 October 2018 |
| | | | | EP | 3174187 | A1 | 31 May 2017 |
| | | | | KR | 20170062923 | A | 08 June 2017 |
| | | | | KR | 102590108 | B1 | 18 October 2023 |
| CN | 210041651 | U | 07 February 2020 | None | | | |
| CN | 109088542 | A | 25 December 2018 | None | | | |
| US | 2007216319 | A1 | 20 September 2007 | US | 7375985 | B2 | 20 May 2008 |
| | | | | JP | 4274485 | B2 | 10 June 2009 |
| | | | | JP | 2007252110 | A | 27 September 2007 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310026367X